# EUROPÄISCHE PATENTSCHRIFT

(11) **EP 2 565 110 B1**
(45) Veröffentlichungstag und Bekanntmachung des Hinweises auf die Patenterteilung: **12.07.2017**
(21) Anmeldenummer: 12182477.5
(22) Anmeldetag: 30.08.2012
(51) Int. Cl.: B62J 99/00, H04W 4/00, H04L 29/08

(54) **Vorrichtung und Verfahren zur Vereinfachung drahtloser Kommunikation zwischen einem Stellglied und einer Benutzerschnittstelle**
Device and methods for simplifying wireless communication between an actuator and a user interface
Dispositif et procédé destinés à simplifier une communication sans fil entre un actionneur et une interface utilisateur

(30) Priorität: 30.08.2011 DE 102011053126
(43) Veröffentlichungstag der Anmeldung: 06.03.2013
(73) Patentinhaber: Joy Industrial Co., Ltd., Taichung Hsien (TW)
(72) Erfinder: Felsl, Andreas, CH2504 Biel (CH)
(74) Vertreter: Schöneborn, Holger

(56) Entgegenhaltungen:
- EP-A2- 2 135 804
- DE-A1- 10 115 289
- DE-A1- 10 353 748

## Beschreibung

Die Erfindung betrifft ein System gemäß dem Oberbegriff des Patentanspruchs 1, eine Verwendung des Systems nach Anspruch 7 und ein Verfahren zur drahtlosen Kommunikation nach Anspruch 11. Elektronische Komponenten werden in allen Bereichen des täglichen Lebens zu einer Vielzahl von Zwecken eingesetzt. Beispielsweise werden sie in (vorwiegend vierrädrigen) Kraftfahrzeugen für sowohl Sicherheitstechnik - allen voran Stabilitäts- und Antiblockiersysteme, aber auch zur Lenkungs-, Dämpfungs- und Federungssteuerung sowie für Airbags und andere Kollisionsschutzvorrichtungen - als auch zum Komfortgewinn - hier seien beispielsweise Navigation mittels GPS oder Audiosysteme erwähnt - verwendet. Auch bei Motorrädern verbreiten sich entsprechende Systeme stark.

Dies ist insoweit in Kraftfahrzeugen und noch stärker bei stationären Geräten vergleichsweise einfach möglich, als das Gewicht ebenso wie der Energiebedarf derartiger Geräte in diesen Techniksegmenten eine völlig untergeordnete Rolle spielen. Dagegen sind insbesondere vorwiegend muskelkraftbetriebene Fahrzeuge wie Fahrräder hinsichtlich Elektrik und Elektronik auf Grund der minimalen verfügbaren Energie und der notwendigen Leichtbauweise heutzutage in der Regel lediglich mit der (gesetzlich vorgeschriebenen) Lichtanlage ausgestattet. Obwohl auch bei Fahrrädern wünschenswert wäre, den Fahrkomfort und die Fahrsicherheit in möglichst ähnlicher Weise zu steigern, wie dies bei Kraftfahrzeugen in den letzten Jahrzehnten der Fall war, verbietet die im Vergleich zu Kraftfahrzeugen minimale Leistung des "Fahrradmotors" Mensch und die damit einhergehende Forderung nach weitestgehender Minimierung der zu bewegenden Masse durch konsequenten Leichtbau bisher den Einsatz von Elektronik im aus der Kraftfahrzeugbranche bekannten Ausmaß. Zudem wird das Fahrrad heutzutage als verlässliches und vergleichsweise kostengünstiges Technikprodukt angesehen. Ein Liegenbleiben durch Softwarefehler oder ein stark erhöhter Preis für neuartige Elektronik können auf dem hart umkämpften Fahrradmarkt kaum durchgesetzt werden.

Allerdings gibt es in neuer Zeit Entwicklungen, trotz des erforderlichen Leichtbaus auch bei Fahrrädern den Einsatz von Elektronik auszuweiten:
Beispielsweise werden in großen Stückzahlen Geschwindigkeitsmesser für Fahrräder angeboten, die mit berührungsloser Aufnahme der Raddrehzahlen (und teilweise der Trittfrequenzen) sowie energiesparenden LCD-Anzeigen arbeiten und damit äußerst energiesparend mit kleinen Batterien jahrelang die gewünschten Daten liefern können. Weiterentwicklungen insbesondere für Trainingssoftware messen zusätzliche Daten wie die aufgewandte Leistung, beispielsweise über die mittels Dehnmessstreifen an den Tretkurbeln aufgenommene Pedalkraft und die Trittfrequenz, und können entsprechende Informationen an herkömmliche Rechner zur Auswertung weitergeben. Weiterhin sind auch GPS-fähige Fahrradcomputer erhältlich. Schließlich wird auch bei der Beleuchtung mehr und mehr LED-Technik mit Tagfahrlicht und Sensorelektronik zum Standard.

Als elektronische Stellglieder, die aktive Stellmotoren am Fahrrad verwenden, werden seit einiger Zeit beispielsweise elektronische Gangschaltungen angeboten. Derartige Schaltungen für Fahrräder, wie sie zunächst von der Firma Mavic (unter dem Namen "ZAP") und aktuell von Shimano (als "DI2") vorgestellt wurden, sind deutlich komfortabler zu bedienen als die derzeit üblichen Systeme, bei denen entweder die Kette mittels Umwerfer und Schaltwerk, die vom Fahrer über einen oder zwei Bowdenzüge gegen eine Federspannung betätigt werden, auf Kettenblättern und Ritzeln verschoben wird, oder Zahnräder bzw. Wälzkörper in Naben oder Tretlagern verschoben werden, um Drehzahl und Drehmoment zwischen Eingang und Ausgang des Getriebes zu wandeln. Ein wesentlicher Vorteil solcher elektronischen Schaltungen liegt darin, dass mit unterschiedlichen Schaltern von verschiedenen Positionen am Lenker geschaltet werden kann, so dass der Fahrer zum Schalten nicht stets auf eine Griffposition festgelegt ist. Zudem könnte ein solches System im Prinzip selbst während der Fahrt nachjustiert werden, um beispielsweise einen Verschleiß durch zu starken Schräglauf der Kette oder unpräzise Justage zu vermindern, obwohl dies die bekannten Systeme derzeit nicht vorsehen. Technisch wird bei diesen Systemen prinzipiell von der Elektronik lediglich ein schwacher Schaltimpuls ausgelöst, die eigentliche für das Schalten benötigte Kraft wird aus der von der Kette übertragenen Kraft zum Antrieb des Rads entnommen. Daher können solche Systeme mit geringem Stromeinsatz und somit kleinen Akkumulatoren bzw. Batterien zum Stromeinsatz auskommen. Eine andere derartige Entwicklung ist das "NuVinci Harmony" Getriebe der Fa. Fallbrook, bei dem ein Elektromotor kontinuierlich die Übersetzung einer Nabenschaltung anpasst, um eine stets konstante Tretfrequenz zu ermöglichen.

Derartige Anwendungen sind jedoch derzeit zum einen wie oben beschrieben durch das Gewicht und den Preis der nötigen Komponenten, inklusive der Stromversorgung, auf ein sehr kleines Marktsegment limitiert. Zum andern können herkömmliche Fahrradcomputer keine aufwändigen Berechnungen beispielsweise zur Optimierung der Gangwahl durchführen, weil keine Integration von Messungen des Fahrradcomputers in die Schaltungssysteme bzw. keine Regelung der Schaltsysteme durch den Computer vorgesehen ist. Daher ist der Fahrradfahrer bei der Wahl des optimalen Gangs für eine bestimmte Geschwindigkeit und Leistung auf seine eigene Erfahrung angewiesen. Dieses Problem verschärft sich bei Pedelecs, weil hier die Motorunterstützung bei passender Trittfrequenz eine weitere Variable ist. Daher ist es für einen Radfahrer schwer möglich, die optimale Kombination von Motorunterstützung, gewähltem Gang und Trittfrequenz für ein bestimmtes Ziel (z.B. einen gewünschten Trainingseffekt, eine Optimierung der Reichweite des Fahrzeugs oder der möglichen Höchstgeschwindigkeit bei optimaler Ergonomie) auszuwählen.

Moderne Nabendynamos haben so hohe Wirkungsgrade, dass sie ständig Strom bereitstellen können, der nicht für die Beleuchtung benötigt wird. Dabei ist der Widerstand dieser Systeme im Fahrbetrieb unter Normalbedingungen praktisch nicht spürbar. Es gibt daher auch bereits Systeme, die den überschüssigen Strom aus Nabendynamos zum Laden von Akkus optionaler Geräte, beispielsweise von Navigationsgeräten oder Handys nutzen. Dieser Strom kann prinzipiell auch zur Versorgung von Fahrradcomputern verwendet werden. Zudem liegt der Einsatz von über den Nabendynamo versorgten Navigationsgeräten und/oder Handys beispielsweise zur Routenfindung nahe.

Außerdem verbreiten sich derzeit die vorstehend kurz erwähnten Pedelecs, also Fahrräder mit elektrischen Hilfsmotoren, immer stärker. Diese Fahrräder verwenden Nabenmotoren und Akkumulatoren zusätzlich zum Antrieb durch den Fahrer zur Fortbewegung. Auf Grund gesetzlicher Vorschriften benötigen sie darüber hinaus eine vergleichsweise umfangreiche Regelungselektronik, die sicherstellt, dass die Fahrzeuge mit Motorunterstützung nicht zu schnell fahren können und dass die Fahrzeuge nur angetrieben werden, so lange der Fahrer selbst einen Beitrag zum Antrieb des Fahrzeugs leistet. Diese Regelungselektronik sowie insbesondere die Motoren müssen aus leistungsfähigen Akkumulatoren (kurz "Akkus") gespeist werden. Da die Pedelecs im Vergleich zum normalen Fahrrad zusätzlich Motoren und Akkus benötigen, sind sie deutlich schwerer als herkömmliche Fahrräder und daher ohne Unterstützung (z.B. bei leeren Akkus) auch schwerer zu bewegen. Zudem ist die Mobilität zumindest insoweit beschränkt, als diese Fahrzeuge im Gegensatz zu herkömmlichen Fahrrädern auf Grund des Gewichts nicht ohne Weiteres (zum Beispiel über Treppen) getragen werden können.

Die Elektronik der Pedelecs sowie die Motoren und Akkumulatoren sind in der Regel verkabelt. Dies ist schon deshalb sinnvoll, weil die hohe Stromaufnahme des meist in der Nabe befindlichen Motors und der Regelung und die aus Gründen der Gewichtsverteilung möglichst zentral liegenden Akkumulatoren eine Verkabelung zur Stromversorgung unumgänglich machen und es somit nahe liegt, auch die elektronische Regelung anhand vom Fahrer eingegebener Daten über Drähte durchzuführen. Allerdings sind derartige Drähte grundsätzlich - insbesondere bei der bei Fahrrädern zumindest in bestimmten Bereichen notwendigen offenen Verlegung entlang von Rahmenrohren und Lenker - empfindlich gegen Beschädigungen.

Um eine Beschädigung von Steuerdrähten auszuschließen, gibt es (derzeit z.B. von der Fa. Cube unter dem Namen "EPO") auch Pedelec-Systeme, welche eine am Lenker befindliche Steuerungseinheit drahtlos mit dem Akku-/ Motorblock verbinden, wodurch Steuerungsleitungen eingespart werden. Darüber hinaus kann durch die einfache Abnahme/Abschaltung der Steuerungseinheit vom Fahrrad zusätzlich eine Diebstahlsicherung bewirkt werden.

Auf Grund der vorstehend beschriebenen Probleme hinsichtlich Preis, Gewicht, benötigter vs. verfügbarer Rechenleistung und verfügbarer Stromzufuhr sind die bisher beschriebenen Systeme jedoch nicht dazu geeignet, im Fahrradmassenmarkt einen deutlichen Zugewinn an Komfort bei vom Markt akzeptierten Preisen zu ermöglichen. Umgekehrt können derzeitige am Fahrrad verwendete Systeme kaum im wesentlich größeren Markt für Kraftfahrzeuge eingesetzt werden, weil die entsprechenden Anforderungen wie vorstehend beschrieben sehr unterschiedlich sind. Andererseits könnte ein System mit ähnlichen Bausteinen für beide Bereiche, das die wesentlichen Anforderungen beider Welten erfüllt, einen weitaus größeren kommerziellen Erfolg haben. Insbesondere stationär werden heutzutage WLAN-Netze neben anderen drahtlosen Kommunikationseinrichtungen wie Infrarot- oder Funkfernbedienungen eingesetzt, um einfache Aufgaben auf Anforderung (z.B. das Öffnen einer Garagentür über Funk) oder bei komplexeren Anwendungen unter Zwischenschaltung eines Rechners drahtlos verschiedene Steuerungsaufgaben auszuführen. Beispielsweise werden in "intelligenten Häusern" auf diese Weise Rollläden, die Beleuchtung oder Heizungen abhängig vom Lichteinfall und/oder der Außentemperatur gesteuert. Hierbei muss jedoch für jeden Aktuator eine spezifische Schnittstelle programmiert werden, die z.B. über WLAN mit der Steuerungszentrale (oder anderen Punkten im Haus) kommuniziert. Daher ist für eine derartige Vernetzung ein hoher Programmieraufwand für jede einzelne Schnittstelle erforderlich, was die Kosten entsprechender Systeme stark vergrößert und mit dazu beigetragen hat, dass solche Systeme noch nicht weit verbreitet sind.

Die DE 101 15 289 A1 offenbart ein elektronisches Steuersystem für Fahrräder gemäß dem Oberbegriff eines jeden der Ansprüche 1 und 11 mit Sensoren, Betätigungselementen (z.B. für eine Gangschaltung) und Steuerelementen. Weiterhin sind drei Prozessoreinheiten vorgesehen, die über asynchrone bidirektionale Kommunikationskanäle miteinander verbunden sind.
Es ist daher eine Aufgabe der Erfindung, ein kostengünstigeres, leichtes und universelles Verfahren und System für die drahtlose Verknüpfung und Steuerung elektronischer Komponenten zu schaffen. Dieses System soll an Fahrrädern einsetzbar sein und die vorstehend genannten Probleme überwinden.
Diese Aufgabe wird durch ein System nach Anspruch 1, eine Verwendung nach Anspruch 7 und ein Verfahren nach Anspruch 11 gelöst.

Vorteilhafte Weiterbildungen sind Gegenstand der Unteransprüche.

Die Erfindung schafft eine Kombination aus einer Datenaustauscheinrichtung, die im Prinzip aus einem elektronischen Modul, beispielsweise einem Chip besteht, der als Webserver dient, mit einem beliebigen Sensor oder Aktuator (in dieser Anmeldung kurz als "Stellglied" bezeichnet). Dadurch kann jedes mit der Datenaustauscheinrichtung versehene Stellglied über eine dynamische Internetanwendung von einer Benutzerschnittstelle angesprochen werden und mit dieser Daten austauschen, ohne aufwändige Protokolle für jeden einzelnen Sensor in die Benutzerschnittstelle implementieren zu müssen. Somit wird die Kommunikation zwischen der Benutzerschnittstelle und jedem Stellglied eines Zweirads durch "Zwischenschalten" der erfindungsgemäßen Datenaustauscheinrichtung wesentlich vereinfacht. Deshalb kann das System flexibel unterschiedliche Sensoren und Benutzerschnittstellen kombinieren, wodurch sich eine Fülle von neuartigen Anwendungsmöglichkeiten ergibt.

Das erfindungsgemäße System verwendet eine Benutzerschnittstelle, die drahtlos, vorzugsweise mittels WLAN, mit Stellgliedern zur Erfüllung verschiedener Aufgaben verbunden ist. Die Benutzerschnittstelle kann dabei beispielsweise ein Smartphone sein.

Die wesentliche Neuerung des vorliegenden Systems besteht also in der vereinfachten Anbindung der Stellglieder an die Kommunikationseinrichtung über die Datenaustauscheinrichtung, die im Wesentlichen einen Webserver auf einem elektronischen Modul, im Folgenden Chip genannt, umfasst. Dieser Chip ist je nach der zu erfüllenden Aufgabe mit entsprechenden Sensoren und/oder Aktuatoren als Stellgliedern über eine vorzugsweise normierte Schnittstelle gekoppelt, die von diesem Chip entweder auf Veranlassung durch die Benutzerschnittstelle oder anhand einer in einem zum Chip gehörenden Speicher abgelegten dynamischen Internetanwendung angesteuert werden. Selbstverständlich können auch Daten von Sensoren über die Datenaustauscheinrichtung an die Benutzerschnittstelle gesendet und dort ausgewertet werden, so dass basierend darauf Aktuatoren angesteuert werden, wodurch ein Regelkreis gebildet werden kann. Die Kopplung zwischen dem Webserver und den Stellgliedern kann bevorzugt über einen Industriestandard wie UART oder CAN-Bus erfolgen; es ist im Prinzip jedoch auch möglich, diese Kopplung frei zu programmieren. Das elektronische Modul kann, wie oben ausgeführt, als Chip realisiert sein, prinzipiell können aber auch mehrere Steuer- und Regelbausteine modular miteinander kontaktiert sein.

Die Anbindung an die Benutzerschnittstelle erfolgt im Gegensatz zum Stand der Technik über eine dynamische Internetanwendung, die in dem vom Stellglied funktional getrennten, jedoch mit diesem elektronisch verbundenen Chip vorliegt. Dynamische Internetanwendungen sind Anwendungen, die im Gegensatz zu den üblichen "statischen" Internetseiten, welche beispielsweise in HTML programmiert sind und im Wesentlichen lediglich vorab eingegebene Informationen darstellen können, mit dem Benutzer oder anderen Ein- und Ausgabestellen wie den Stellgliedern interagieren und beispielsweise auf Eingaben des Benutzers (oder von Sensoren erhaltene Werte) reagieren können. Zu diesem Zweck schafft die Erfindung eine standardisierte Schnittstelle zu einem drahtlosen Netzwerk, insbesondere einem WLAN, auf einem Chip als einer Datenaustauscheinrichtung, der dann lediglich einmalig mit dem entsprechenden Stellglied zu koppeln ist, so dass anschließend die Funktionalität des Stellglieds über beliebige dynamische Internetanwendungen zur Verfügung gestellt werden kann. Die Erfindung verwendet somit ein Netzwerkinterface, das vorzugsweise von einem WLAN, oder einem anderen Netzwerk, ausgeführt wird.

Beim erfindungsgemäßen System ist also jedes Stellglied mit einer Netzwerksteuerung über einen entsprechenden Chip versehen. Diese Netzwerksteuerung sorgt für die Verbindung des Stellglieds zur Benutzerschnittstelle vorzugsweise mittels WLAN. Auch die mit der Erfindung verwendbare Benutzerschnittstelle (die häufig auch als User Interface bezeichnet wird) ist kompatibel zur verwendeten Zugriffsart, also vorzugsweise kompatibel zum WLAN-Standard.

WLAN ist eine im Zweiradbereich praktisch noch nicht zur Kommunikation zwischen einzelnen Zubehörteilen des Fahrzeugs verwendete Technik. Zwar existieren Ansätze, WLAN in Autos zu implementieren, um entweder über ein WLAN-fähiges Gerät mit dem Internet, mit anderen Fahrzeugen oder mit der Umgebung (beispielsweise zum Erhalt von Informationen über den Verkehrsfluss aus am Straßenrand angebrachten Verkehrsüberwachungssystemen) zu kommunizieren, fahrzeugintern wird jedoch in der Regel (insbesondere in Automobilen) mittels Kabel oder mit anderen drahtlosen Übertragungsstandards wie Bluetooth zwischen Geräten kommuniziert. Durch die Kabelverlegung wird ein hoher Montageaufwand erforderlich, wenn neue Geräte angeschlossen werden sollen, oder es müssen bereits sämtliche möglichen Leitungen vorab verlegt sein, ohne dass sicher ist, ob die entsprechende Funktionalität überhaupt benötigt wird. Im Gegensatz zu diesen herkömmlichen automobiltechnischen Lösungen, bei denen WLAN als (lediglich zusätzliche) Kommunikationsmöglichkeit des Fahrzeugs mit externen Vorrichtungen (beispielsweise Laptops der Beifahrer sowie mit einer UMTS-Verbindung via Router in ein GSM-Funknetz oder - in Versuchsprojekten - direkt zwischen Fahrzeugen) verwendet wird, setzt die vorliegende, auf den Einsatz bei Zweirädern gerichtete Erfindung bevorzugt auf WLAN als hauptsächliches fahrzeuginternes Kommunikationssystem zwischen verschiedenen Stellgliedern und der Benutzerschnittstelle.

Auf diese Weise kann ein flexibles und wenig störanfälliges Kommunikationsnetz im Fahrzeug aufgebaut werden. Jedes im Netz teilnehmende erfindungsgemäße Gerät ist mit einer einfach zu programmierenden Benutzerschnittstelle drahtlos zu verwalten ist. Darüber hinaus können nicht verwendete erfindungsgemäße Geräte einfach und schnell modular entfernt bzw. abgeschaltet (oder neue hinzugefügt) werden, ohne das Fahrzeug umbauen zu müssen.

Bei Fahrrädern ist dieser modulare und energiesparende Aufbau bedeutsam. Während im Kraftfahrzeug quasi beliebig viel Energie und Raum zum dauernden Mitführen auch selten benötigter relativ schwerer Geräte (z.B. Sicherheitsvorrichtungen wie Airbags oder Gurtstraffer) und zur Stromversorgung derselben notfalls selbst im Kilowattbereich zur Verfügung steht, sind Radfahrer darauf angewiesen, die äußerst knapp bemessene vorhandene Energie hocheffizient zu nutzen. Daher erleichtert ein modularer Aufbau, bei dem bestimmte Komponenten auch zeitweise ohne Aufwand weggelassen können, so lange sie nicht benötigt werden, den Einsatz insbesondere im Fahrradbereich. Auch bei Motorrädern bietet dieser modulare Aufbau Vorteile, weil beispielsweise eine preiswerte Grundausstattung nach und nach mit weiteren Modulen ergänzt werden kann. Zudem ist WLAN ausgereift und verschiedene WLAN-Standards können eingesetzt werden. Entsprechende Benutzerschnittstellen können einfach programmiert werden. Insbesondere ist die Programmierung von dynamischen Internetanwendungen besonders auf Smartphones bereits weit verbreitet, so dass die Bereitstellung entsprechender Hardware, die einfach über dynamische Internetanwendungen zu programmieren ist, dazu führen kann, dass neue Applikationen dieser Hardware einfach entwickelt werden können.

Erfindungsgemäß weist ein System ein Stellglied und eine Vorrichtung auf, die eine Datenaustauscheinrichtung (mit einem eingebetteten Webserver) umfasst, die von der Benutzerschnittstelle über eine dynamische Internetanwendung, vorzugsweise über WLAN, in Verbindung steht. Das Stellglied kann einerseits Daten beispielsweise über Fahrzustände des Fahrzeugs an die Benutzerschnittstelle senden und andererseits auch aktiv auf Anweisung von der oder über die Benutzerschnittstelle Zustände des Fahrzeugs verändern.

Beispiele für derartige Stellglieder, die nachstehend noch ausführlicher beschrieben werden, umfassen Aktuatoren zum Betrieb von Schaltungen an Fahrrädern ähnlich den vorstehend als Stand der Technik beschriebenen, die auf Grund der derzeitigen Belastung und Geschwindigkeitsanforderung einen passenden Gang bzw. eine passende Übersetzung auswählen; im Rad integrierte Pumpen, welche (z.B. basierend auf GPS-Daten) abhängig vom Fahrzustand und Ort des Fahrzeugs oder nach Benutzeranforderung den Reifendruck messen und durch Einfüllen und Ablassen von Luft beeinflussen; elektrische Antriebe, deren Rekuperationseffizienz verbessert werden kann, indem beispielsweise bei Abfahrten oder bei schwächeren Bremseingriff Leistung von einem durch die Räder angetriebenen Motorgenerator in Akkumulatoren oder ähnliche Speichervorrichtungen abgeführt wird; oder auch Feder-/Dämpfersysteme, die abhängig vom Untergrund die Federeigenschaften verändern.

Als Benutzerschnittstelle wird vorzugsweise ein handelsübliches Smartphone verwendet, so dass die Applikation auf dieses Smartphone ausgelagert ist. Smartphones werden heutzutage von vielen Menschen für die unterschiedlichsten Aufgaben eingesetzt. Daher bieten sie eine vergleichsweise hohe Rechenleistung und ausreichend lange Betriebsdauern. Darüber hinaus unterstützen heutige Smartphones unterschiedliche drahtlose Schnittstellen. Wird ein Smartphone als Benutzerschnittstelle verwendet, so kann zudem die Rechenkapazität des Smartphones für verschiedene Aufgaben im Fahrzeug verwendet werden. Gleichzeitig ist diese Lösung im Hinblick auf die möglichen Aufgaben quasi kostenneutral, da ein Benutzer das Smartphone aus anderen Gründen besitzt. Somit fallen lediglich Kosten für den erwerb der Sensoren und eventuell der zugehörigen Applikationen an.

WLAN ist heute in jedem neuen Smartphone vorhanden, um im Hotel, Ausland, Büro und zu Hause die Datenkommunikation mit dem Internet nicht über das Mobilfunknetz abwickeln zu müssen. WLAN ist die Drahtlosalternative zu Ethernet und somit perfekt für die Internetkommunikation geeignet. Für Zugriffe auf Internetressourcen, wie beispielsweise Webserver, verwendet jedes Smartphone daher bei vorhandener Verbindung standardmäßig WLAN. WLAN bietet mit Abstand den höchsten Datendurchsatz aller in Smartphones vorhandenen drahtlosen Schnittstellen bei sehr geringsten Latenzen. Es lassen sich daher über WLAN dynamische Echtzeitbenutzerschnittstellen realisieren. Gleichzeitig lässt sich durch einfache Updates verbesserte Software einspielen, so dass die Benutzung des Fahrzeugs und insbesondere die Steuerung von Stellgliedern für das Fahrzeug über das Smartphone vereinfacht wird. Heute sind "Embedded WLAN"-Lösungen verfügbar, die sich mit sehr geringem Aufwand und nahezu ohne Kenntnis der enthaltenen WLAN-spezifischen Technologien integrieren lassen. Diese Lösungen, die in der Regel als Module angeboten werden, lassen sich in nahezu idealer Art und Weise durch die Steuerungselektronik ergänzen, die nahezu jede Komplexität in Bezug auf die Netzwerkfähigkeiten vermeiden hilft. Obwohl daher WLAN derzeit bevorzugt wird, können prinzipiell auch andere drahtlose Kommunikationstechniken wie Bluetooth, GPRS etc. zum Datenaustausch zwischen der Benutzerschnittstelle und der Vorrichtung mittels der dynamischen Internetanwendung verwendet werden.

Besonders bevorzugt wird die Erfindung von den Erfindern in Fahrrädern, beispielsweise in Pedelecs, eingesetzt. Wie bereits erörtert war bisher praktisch nicht vorstellbar, dass Fahrräder mit elektronischen Systemen zur Verbesserung von Komfort und Sicherheit ausgerüstet werden. Dagegen sprachen der Preis entsprechender elektronischer Schnittstellen, die aufwändige Herstellung und dadurch mangelnde kostengünstige Verfügbarkeit von passenden Stellgliedern und die komplexe Programmierung der drahtlosen Kommunikation zwischen den Schnittstellen der Stellglieder und einer Benutzerschnittstelle.

Zur Lösung dieses Problems wurde daher von den Erfindern ein einfacher Webserver auf einem integrierten Chip entwickelt, der in das Stellglied eingebaut wird. Derartige Chips bieten die Funktionalität zur einfachen Entwicklung einer Applikation ohne Spezialwissen im Bereich der Netzwerkprotokolle. Die applikationsseitigen Nutzdaten werden dabei vollständig getrennt von der Logik für Server und Netzwerkzugang gespeichert. Die Applikation kann daher prinzipiell mit herkömmlichen Programmierkenntnissen wie andere Smartphone-Applikationen erstellt und auf das Smartphone ausgelagert werden. Die Steuerung des Aktuators oder Sensors im Stellglied wird ebenfalls vom Chip/Modul vorgenommen. Beispielsweise kann eine Verbindung zwischen Chip und Sensor/Aktuator über eine normierte Schnittstelle wie CAN-Bus, UART, oder dergleichen erfolgen.

Dadurch können Daten und Steuerbefehle einfach mit einer passenden Benutzerschnittstelle wie einem Smartphone oder einem spezifisch für diesen Zweck hergestellten Gerät ausgetauscht werden. Die Programmierung der Applikation kann im Prinzip über bekannte Programmiersprachen erfolgen, so dass eine einfache Entwicklung möglich ist. Daher fallen lediglich vergleichsweise geringe Kosten für eine Applikationsprogrammierung an. Zudem können einzelne Stellglieder oder Sensoren, die mit den Chips verbunden sind, einfach ins Netzwerk integriert werden.

Das Smartphone kann darüber hinaus die Rechenkapazität zur Verfügung stellen. Natürlich kann - insbesondere bei Fahrzeugen mit größeren elektrischen Energiespeichern wie Motorfahrzeugen oder Pedelecs, aber auch über beispielsweise Nabendynamos gespeist - eine gesonderte Recheneinheit statt eines Smartphones als Benutzerschnittstelle verwendet werden, die aus der Fahrzeugelektrik mit Strom versorgt wird. Durch das flexible vorgeschlagene WLAN-System wird es darüber hinaus möglich, Daten und Programme zwischen Smartphone und einer solchen Recheneinheit auszutauschen, so dass beispielsweise bestimmte Applikationen über ein Smartphone aus dem Internet geladen und an die Recheneinheit weitergegeben werden. In einer besonders bevorzugten Ausführungsform soll das Smartphone die Recheneinheit ersetzen, um Gewicht und Kosten zu sparen.

Durch die Vielseitigkeit der Webserver auf dem Chip, an die mittels der Steuerungselektronik unterschiedliche Sensoren und Aktoren über standardisierte Schnittstellen angebunden werden, können die Chips relativ kostengünstige Massenware sein.

Derartige Webserver können auch so konfiguriert sein, dass die Stellglieder ohne eine zentrale Steuereinheit Daten untereinander in der Art eines "Cloud Computing" austauschen. Dadurch kann beispielsweise bei einem Pedelec eine optimierte Wahl eines Antriebs unter Berücksichtigung der gewünschten oder zulässigen Geschwindigkeit und der bevorzugten Trittfrequenz ohne direkte Einbeziehung der Benutzerschnittstelle erfolgen, so dass die Akkuentladung verzögert oder die Aufladung durch Rekuperation beschleunigt wird. Zudem kann mit einer ähnlichen Konfiguration auch die Aufladung oder zumindest verringerte Unterstützung zur Schonung der Akkus beispielsweise dann erfolgen, wenn das Pedelec beschleunigt, ohne dass der Antrieb betätigt wird, beispielsweise weil es bergab geht oder Rückenwind herrscht. Bergab kann darüber hinaus auf diese Weise die Geschwindigkeit ohne Verschleiß der Bremsen verringert werden. Vorteilhafterweise kann auch ein entsprechender Austausch über die Benutzerschnittstelle bzw. ein als solche verwendetes Gerät mit ausreichender Rechenkapazität stattfinden.

Als Webserverchip bzw. Datenaustauscheinrichtung wird in den nachfolgenden Ausführungsbeispielen der über die Anmelder zu beziehende VIPAR Internet Chip verwendet. Dieser Chip wird erfindungsgemäß für jedes Stellglied zusammen mit einem entsprechenden Aktuator eingebaut, der vom Chip anhand von vorab programmierter Applikationssoftware gesteuert wird. Die Applikationssoftware und von dieser benötigte oder gesammelte Daten können durch den Chip auf einem Speichermedium (Serielles SPI-Flash, SD-Speicherkarten) abgelegt werden. Dieser Speicher ist vollständig von der Firmware des Chips getrennt.

Der VIPAR Internet Chip (der der in den Ansprüchen genannten "Datenaustauscheinrichtung" entspricht) ist in erster Linie ein "Embedded (,eingebetteter') Webserver". Er wird mit einer festen Firmware (fest verdrahtetem TCP/IP-Stack bzw. -Stapel, Webserver, Konfigurationsoberfläche etc.) ausgeliefert. Es ist ein vollständig individuelles Design der Applikation, d.h. der Ansteuerung der Sensoren/Aktoren sowie der Auswertung ausgelesener Daten, möglich. Außerdem lassen sich alle per FAT32 formatierbaren SD-Speicherkarten mit dem VIPAR Internet Chip verwenden, so dass ein immens großer Speicher für die Steuerung zur Verfügung steht.

Die Entwicklung einer Applikation ist in der Regel am effizientesten auf einem PC möglich. Durch die Verwendung von Standardspeicherkarten mit dem gängigen FAT32 Dateisystem reicht es für den Test auf dem Embedded System auf Basis des VIPAR Internet Chip aus, die Dateien der Applikation vom Entwicklungsrechner auf eine Speicherkarte zu kopieren und diese in das VIPAR-Entwicklungssystem einzustecken. Die Verwendung einer speziellen Entwicklungsumgebung, das "Einkompilieren" in die VIPAR-Firmware und das Programmieren in einen VIPAR-chipinternen Programmspeicher ist nicht erforderlich. Entwicklung und Test sind damit sehr einfach und flexibel.

Wie in Standard-Webapplikationen, die auf Webservern im Internet laufen, kann eine JSON-Schnittstelle für den Austausch zwischen einer Applikation und anderen Software-Bestandteilen des VIPAR Internet Chip verwendet werden. Im VIPAR Internet Chip wird dabei mit dem Befehlsinterpreter kommuniziert. Dieser erlaubt den Zugriff auf alle Host-Schnittstellen, den Empfang und das Versenden von Paketen über die vorhandenen Netzwerkschnittstellen, die Konfiguration des Protokollstacks (IP-Adresse, Adressvergabemechanismus, NetBIOS Name etc.) und den Zugriff auf anwenderprogrammierbare Speichermedien (Serielles SPI Flash, SD-Speicherkarte etc.).

Da vorausgesetzt wird, dass der Fachmann die Grundzüge der Programmierung derartiger Applikationen kennt, wird hier nicht im Einzelnen auf diese Programmierung eingegangen.

Für unterschiedliche beispielsweise in ein Smartphone eingebaute Internetbrowser lassen sich mit dem VIPAR Internet Chip jeweils individuelle Applikationen realisieren.

Die Funktion eines Embedded Device Servers, der eine Umsetzung von beispielsweise UART Schnittstellen auf Netzwerkverbindungen ermöglicht (TCP Tunnel), erledigt ein VIPAR Internet Chip quasi nebenbei. Es ist dabei - unter Berücksichtigung der Anzahl der Hardware-UART-Schnittstellen im VIPAR Internet Chip als einem limitierenden Faktor - auch die gleichzeitige Verwendung mehrerer TCP Tunnel möglich. Das Tunneln von Daten über TCP Verbindungen ist auch nicht auf UART Schnittstellen begrenzt, sondern kann genauso gut über CAN, RS485 oder andere gewünschte Schnittstellen erfolgen.

Nachfolgend werden Beispiele für den Einsatz eines erfindungsgemäßen Aufbaus mit einer Kombination aus VIPAR Internet Chip und Aktuator als Stellglied an einem Pedelec oder Fahrrad bzw. in einer Ausführungsform an zwei miteinander interagierenden Pedelecs beschrieben. Einige der beispielhaften Ausführungsformen können darüber hinaus wie bei den Beispielen erwähnt auch ohne größere Modifikationen bei anderen Fahrzeugen, beispielsweise Kraftfahrzeugen eingesetzt werden.

Das Stellglied soll im ersten Ausführungsbeispiel eine elektronische Fahrradkettenschaltung bedienen. Derartige elektronische Kettenschaltungen sind, wie bereits vorstehend beschrieben, im Prinzip bekannt und werden derzeit beispielsweise von Shimano unter der Bezeichnung "DI2" bzw. "Digital Integration 2" verkauft.

Die Schaltung ist jedoch im Unterschied zu den bekannten Schaltungen nicht nur mit einem Aktuator versehen, der auf einen Impuls (Tastendruck) durch den Fahrer einen Gang wechselt, wie dies in der bekannten elektronischen Schaltung geschieht, sondern stattdessen mit einem Aktuator und einem Chip zur Ansteuerung des Aktuators wie vorstehend beschrieben ausgestattet. Dadurch kann die Schaltung "automatisch" gesteuert werden. Wenn beispielsweise angestrebt wird, mit einem Fahrrad oder Pedelec bei einer konstanten Herz- und/oder einer konstanten Trittfrequenz zu trainieren, kann die Schaltung mit einer Pulsmessung und/oder Trittfrequenzmessung verknüpft sein. Fällt nun der Puls bei gleichbleibender Trittfrequenz ab (oder erhöht sich die Trittfrequenz bei gleichbleibendem Puls), kann die Software darauf schließen, dass die verwendete Übersetzung zu klein ist (z.B. wegen einer abfallenden Straße oder wegen Rückenwind) und der Fahrer den gewünschten Trainingseffekt bei höherer Geschwindigkeit (und damit einer größeren Übersetzung) besser erreichen kann. Zudem kann eine solche Software auch berücksichtigen, dass bei sog. "Halfstep"-Schaltungen bei Fahrrädern mit zwei oder mehr Kettenblättern und zwei oder mehr (derzeit bis zu elf) Ritzeln am Laufrad, wie sie bei Kettenschaltungen üblich sind, der "nächsthöhere Gang", das bedeutet, die Kettenblatt-Ritzel-Kombination, welche die nächstgrößere Übersetzung gegenüber der aktuell gewählten zeigt, sowohl ein Schalten des Umwerfers als auch des Schaltwerks bedingen kann. Das kann bedeuten, dass z.B. bei einer Kettenschaltung die Kette für den nächsthöheren Gang zunächst entgegen der eigentlichen Erwartung auf ein kleineres Kettenblatt gelegt wird, dafür aber auch ein kleineres Ritzel hinten verwendet wird, wobei ein oder mehrere dazwischenliegende "mittlere" Ritzel übersprungen werden. Dabei kann die Applikation selbstverständlich auch Randbedingungen wie einen unerwünschten Schräglauf der Kette berücksichtigen und bestimmte von der Übersetzung her geeignete Gänge deshalb ablehnen (oder andere bevorzugt auswählen).

Umgekehrt kann die beispielhafte Ausführungsform zudem bei ansteigendem Puls/ fallender Trittfrequenz analog den nächstkleineren Gang für den Fahrer wählen.

Durch ein derartiges System kann dem Fahrer ein Gefühl ähnlich wie bei einer Automatik eines Kraftfahrzeugs vermittelt werden. Da er stets mit optimaler Trittfrequenz und Kraft arbeitet, kann er darüber hinaus mit geringerer Anstrengung größere Strecken zurücklegen.

Ferner ist es auch möglich, bei einer festgestellten versehentlichen Verstellung der Schaltung beispielsweise durch eine Dehnung des Bowdenzugs die Schaltung über das Smartphone als Benutzerschnittstelle nachzujustieren.

Bis jetzt wurde in diesem Ausführungsbeispiel noch nicht beschrieben, dass von den zusätzlichen Möglichkeiten Gebrauch gemacht wird, die ein Pedelec bietet, nämlich einer Unterstützung und/oder Bremsung durch den Motor. Falls das Fahrrad ein Pedelec ist, kann zusätzlich oder alternativ zur beschriebenen Steuerung der Schaltung der Motor des Pedelecs (zumindest im erlaubten Geschwindigkeitsbereich, in Deutschland derzeit also bis 25 km/h) betrieben werden, um eine gleichmäßige Belastung und/oder Trittfrequenz zu unterstützen, indem z.B. bergauf oder bei Gegenwind die Fahrt durch den Motor unterstützt wird oder der Motor bergab oder allgemein bei zu geringem Widerstand zur Bremsung rekuperiert, also als Generator arbeitet und die Akkumulatoren mit dem gewonnenen Strom lädt.

Selbstverständlich können nicht nur, wie vorstehend beschrieben, Fahrten mit konstanter Belastung vorgesehen werden. Es ist auch möglich, beispielsweise ein Intervallprogramm vorzugeben, bei dem einer hohen Belastung beispielsweise unter Bremsung durch den Motor eine Erholungsphase eventuell mit Unterstützung durch den Motor folgt.

Dabei kann die Schaltung nach diesem Ausführungsbeispiel zumindest besser als ein mäßig geübter Fahrer mit Kettenschaltungen eine stets optimale Übersetzung sowie einen optimalen Trainingseffekt sicherstellen. Zumindest in Verbindung mit einem Motor ist dieser Trainingseffekt zudem praktisch unabhängig vom vorhandenen Trainingsgelände erzielbar, weil bergauf vom Motor unterstützt und bergab gebremst werden kann. Es ist bei entsprechender Programmierung sogar möglich, ein Streckenprofil einer anderen Strecke zu simulieren, um sich beispielsweise im Training auf ein Radrennen auf einer bestimmten Strecke vorzubereiten. Solch eine Simulation war bisher nur an relativ teuren Hometrainern mit zusätzlichen Bildschirmen möglich, bei denen aber das eigentliche Fahrgefühl durch Fahrtwind, Umgebung etc. vollständig fehlt.

In einer weiteren vereinfachten Variante dieser Ausführungsform an einem Fahrrad, bei dem kein Motor vorgesehen ist oder dieser nicht benutzt wird, kann ein zusätzliches Stellglied beispielsweise an einer Bremse des Fahrrads vorgesehen sein, um diese bei gewünschter höherer Belastung anzuziehen und so die Belastung zu erhöhen.

Allgemein werden Bremsen an Fahrzeugen derzeit entweder hydraulisch oder - vorwiegend bei Fahrrädern mit Felgenbremsen, bei Kraftfahrzeugen meist nur noch als Feststellbremsen - mittels Seilzügen betätigt. Ein Stellglied an einer Bremse muss daher im Prinzip so ausgebildet sein, dass es einen Hydraulikdruck im Bremskolben anpasst, beispielsweise über einen piezoelektrischen Aufnehmer, der einen Durck erzeugenden oder -aufnehmenden Kolben bewegt, oder so, dass es eine Länge eines Seilzugs (Bowdenzugs) verändert, indem es z.B. den Innenzug oder den Außenzug des Bowdenzugs verlängert oder verkürzt.

In einer nachstehend beschriebenen weiteren Ausführungsform wird daher von einem Stellglied ausgegangen, das beispielsweise über Piezoelemente oder auf andere Weise den Druck in einem hydraulischen Bremskolben ändert. Beispielsweise kann durch Verringern des Drucks im Bremskolben bei einer zu starken Bremsung durch den Fahrer die Gefahr des Blockierens herabgesetzt werden, wie dies herkömmlich bei Kraftfahrzeugen schon bekannt ist. Dies wird zur Zeit in Kraftfahrzeugen jedoch mit Techniken bewerkstelligt, die bereits auf Grund des Gewichts und der Komplexität der Bauteile beim Fahrrad nicht verwendbar sind. Im Falle eines Pedelecs mit Nabenmotor könnte am angetriebenen Rad eine hohe Auflösung der Drehung durch Auswerten von Signalen des vielpoligen Nabenmotors erreicht werden, wodurch die zugehörige Bremse über den genannten Piezoaktuator kostengünstig geregelt werden kann, wenn ein Bremsbasisdruck beispielsweise durch das Ziehen der Handbremse vom Fahrer bereitgestellt wird. Prinzipiell ist auf diese Weise sogar ein "Brake-by-Wire"-System vorstellbar, das nur auf Grund des Stellglieds basierend auf einer Eingabe an einem Bremshebel oder - pedal, das lediglich mit einem Sensor gekoppelt ist, bremst und dies - durch Verhindern des Blockierens - weit effektiver und schonender als der Fahrer es alleine könnte. Ein solches System kann darüber hinaus prinzipiell auch bei Kraftfahrzeugen eingesetzt werden, um die Bremsung zu optimieren. Bei über Motorgeneratoren elektrisch angetriebenen Fahrzeugrädern kann zusätzlich die mechanische Bremse teilweise gelöst und durch Rekuperation ergänzt werden, um die durch Bremsen abgebaute Energie zumindest teilweise zurückzugewinnen. Statt des Drucks in einem Hydrauliksystem zum Abbremsen eines Rads kann ein derartiges System wie vorstehend erwähnt im Prinzip auch die Längendifferenz zwischen Innen- und Außenzug eines Bremsbowdenzugs verändern, um dadurch die Bremskraft zu regulieren, oder in ein direkt an der Felge bzw. Bremsscheibe wirkendes System eingebaut sein, das die übertragene Kraft zwischen feststehendem Bremsbacken bzw. Bremsgummi und drehendem Element (Scheibe oder Felge) zum Bremsen des Rads verändert..

In einem noch weiteren Ausführungsbeispiel kann das erfindungsgemäße System, das die über eine dynamische Internetanwendung ansteuerbare Einrichtung und ein Stellglied umfasst, beispielsweise dazu eingesetzt werden, die Stellung des Fahrers auf einem Zweirad oder auch einem "Quad", einem vierrädrigen Kraftfahrzeug für meist ein bis zwei Personen mit sattelförmigem Fahrersitz, an die Fahrsituation anzupassen.

Typischerweise müssen Quad- und Zweiradfahrer insbesondere an steilen Passagen im Gelände durch Gewichtsverlagerung verhindern, dass das Fahrzeug nach vorn oder hinten kippt, wodurch die Antriebsräder durchdrehen oder gelenkte Räder abheben könnten, so dass das Fahrzeug nicht mehr beherrschbar ist. Insbesondere für Mountainbiker, die - im Gegensatz zu beispielsweise Endurofahrern, bei denen die Maschine ungefähr so viel wie oder sogar mehr als der Fahrer wiegt - das hauptsächliche Gewicht des Systems Fahrer/Fahrzeug bilden, ist es schwierig, im Gelände stets eine geeignete Position auf dem Fahrrad zu finden, bei der die vorstehend genannten Probleme unterdrückt werden können.

Hier können Aktuatoren abhängig beispielsweise von der Neigung des Fahrzeugs oder des über GPS und Zusatzinformationen bekannten Geländes einen Sattel nach vorn und oben verstellen, um eine Bergauffahrt zu erleichtern, oder nach hinten und unten, um beim Bergabfahren (und Bremsen) das Risiko eines Überschlags zu verringern. Parallel kann auch der Lenkervorbau (bergauf verlängert/ abgesenkt, bergab verkürzt/ angehoben) entsprechend verändert werden. Mit einer solchen Hilfe können Mountainbiker schnell eine bessere Beherrschung ihres Sportgeräts erreichen. Dadurch wird die Fahrsicherheit erhöht. Zudem können sie die vom System "erzwungene" Gewichtsverlagerung lernen und diese auch dann übernehmen, wenn sie auf anderen Rädern nicht (mehr) vorgegeben wird.

Auch bei Straßenfahrrädern kann es sinnvoll sein, die Position des Sattels zu den Pedalen und die Position des Lenkers zum Sattel abhängig von der Fahrsituation oder vom Fahrer anzupassen. Bei großem Druck auf die Pedale ist beispielsweise ein Zurück- und Hochsetzen des Sattels zweckmäßig, bei vergleichsweise hoher Trittfrequenz sitzt der Fahrer dagegen üblicherweise etwas niedriger. Zudem kann über die Verstellung des Lenkers und des Sattels unter Umständen bei schneller Fahrt eine windschnittigere Position erreicht werden, während bei langsamer Fahrt eine für die Rückenmuskulatur angenehmere aufrechtere Position eingenommen werden kann. Entsprechende Verstellungen von Sattel und Lenker, eventuell auch von Kurbellängen, können in an sich bekannter Weise über Stellglieder abhängig von aufgenommenen Daten vorgenommen werden. Es ist zudem vorstellbar, dass ausgehend von einer "Standardposition" das System verschiedene Änderungen der Lenker- und Sattelstellung und durchführt und somit der Radfahrer bei einer entsprechenden Anwendung eine eventuell besser an seine persönliche Ergonomie angepasste Stellung auf dem Fahrrad findet.

Auch die Einstellung von Dämpfung und Federung von Fahrzeugen sowie des Luftdrucks im Reifen könnte durch entsprechende Stellglieder basierend auf dem vorstehend erläuterten Prinzip erfolgen. Beispielsweise wird bei einem gefederten Fahrzeug auf asphaltiertem Untergrund (beispielsweise einer Straße) ein hoher Reifenluftdruck sowie eine straffe Federungsabstimmung von Vorteil sein, um möglichst wenig Energie zu verschwenden, dagegen kann im Gelände eine weichere Abstimmung und ein verringerter Luftdruck im Reifen günstiger sein, um eine bessere Traktion zu erzielen.

Eine Möglichkeit besteht auch darin, über geeignete Sensoren, beispielsweise Impactsensoren Betriebszustände des Zweirads, insbesondere der Fahrwerkskomponenten, beispielsweise die Beschleunigungen beim Ein- und Ausfedern oder Bremsbeschleunigungen zu erfassen und dann in Abhängigkeit von den erfassten Parametern das Fahrwerk einzustellen. So kann beispielsweise bei einer starken Bremsbeschleunigung ein nachteiliges Eintauchen der Gabel durch Erhöhung der Dämpfung verhindert werden. In entsprechender Weise könnte auch die Federungs- oder Dämpfungsrate in Abhängigkeit von den auf das Zweirad wirkenden Stößen verändert werden, um das Fahrverhalten zu optimieren. Erfasst werden können auch übermäßige auf den Rahmen wirkende Beschleunigung, die bei einem Sprung oder einem Sturz auftreten.

Eine weitere Möglichkeit besteht darin, die auf das Zweirad wirkende Belastungen über derartige Impactsensoren aufzunehmen und abzuspeichern, so dass übermäßige Belastungen aufgrund der gespeicherten Daten erkannt werden können und eine Schadensanalyse bei einem Versagen oder einem Bruch einer Komponente erleichtert ist. Ein derartiges Ausführungsbeispiel ermöglicht es auch, im Verleihbetrieb bei Rückgabe eines Rads zu prüfen, ob dieses übermäßigen, nicht durch den Verleihvertrag abgedeckten Belastungen ausgesetzt war.

Derartige Impactsensoren oder die elektronische Schaltung können so ausgelegt werden, dass sie lediglich bei Überschreiten eines Grenzwertes ansprechen oder erst dann ein Belastungswert abgespeichert wird, so dass die abzuspeichernde Datenmenge minimiert ist.

Als ein weiteres Ausführungsbeispiel sei ein gemeinsames Training von Radsportlern unterschiedlicher Leistungsfähigkeit mit Rädern angenommen, die jeweils das erfindungsgemäße System aufweisen. In diesem Fall kann beispielsweise ein Smartphone als Benutzerschnittstelle auch zwei oder mehr in einer Gruppe fahrende Räder analog zur Steuerung im ersten Ausführungsbeispiel steuern. Darüber hinaus kann bei Verwendung von Radnabenmotoren beim Rad des leistungsstärkeren Trainingspartners kontinuierlich Leistung in den Akku abgeführt werden und notfalls zusätzlich beim leistungsschwächeren Partner eine Unterstützung mittels des Motors erfolgen. Tritt dabei ein größerer Abstand zwischen den Rädern als gewünscht auf, kann das führende Rad stärker gebremst und/oder das nachfolgende Rad stärker beschleunigt werden. Beim Windschattenfahren bei gemeinsamem Training kann darüber hinaus eine (aktive) Bremsung des führenden Fahrers an die Fahrzeuge des / der nachfolgenden Fahrer gemeldet und eventuell eine angepasste Verzögerung automatisch eingeleitet werden, um die Sicherheit zu vergrößern. Insbesondere bei Mountainbikeausfahrten oder generell Passfahrten können darüber hinaus bergauf schwächere Fahrer in der Gruppe unterstützt werden, so dass eine gemeinsame Ausfahrt als Gruppenerlebnis mit gleicher Geschwindigkeit bei gleicher persönlicher Anstrengung trotz unterschiedlicher persönlicher Leistung möglich wird. Eine Steuerung der Belastung kann dabei wahlweise zentral so vorgenommen werden, dass ein "Master" (beispielsweise das Smartphone eines Tourenleiters oder Trainers) mehrere "Slave"-Einheiten (beispielsweise die Smartphones anderer Fahrer, die wiederum wie beschrieben die Leistungsunterstützung in deren Fahrrädern steuern) so regelt, dass er darauf achten kann, dass sich kein Teilnehmer überfordert oder so, dass bestimmte Teilnehmer umgekehrt (zeitweise) stärker gefordert werden. Alternativ kann auch über Indikatoren an den Fahrrädern bzw. Fahrern, z.B. über Abstände anhand einer GPS-Ortung der Fahrräder der Gruppe, über Puls-oder andere gemessene Belastungswerte oder auf ähnliche Weise eine spezifische Unterstützung für jeden Fahrer so eingestellt werden, dass die Gruppe problemlos gemeinsam trainieren kann. Prinzipiell kann auch beides kombiniert werden, um Fahrer (beispielsweise im Sinne eines Intervalltrainings) vorübergehend mehr oder weniger zu fordern, ohne den Zusammenhalt und damit die gegenseitige Motivation in der Gruppe aufgeben zu müssen. Auf diese Weise können Radsportler unterschiedlicher Leistungsklassen effizient gemeinsam trainieren und ein "Crowd Cycling" auf einer Strecke absolvieren, die ansonsten für einige Fahrer konditionell zu herausfordernd oder aber nicht hinreichend trainingsfördernd wäre. Aus Sicht der Radbeherrschung gibt dies die Möglichkeit, "technische" Strecken wie verblockte Trails im ausgeruhten Zustand zu fahren, so dass eine Technikschulung im Gelände bereits bei geringerer Fahrkondition möglich ist. Der Trainingsreiz bleibt dabei für alle Fahrer dank des Ausgleichs ihrer Fähigkeiten ähnlich; Profisportler können Trainingseinheiten gemeinsam mit interessierten Laien absolvieren und sich dennoch effektiv auf hohem Niveau auf Wettkämpfe vorbereiten. Dies war bisher nur mittels sog. "Spinning"-Fahrräder stationär möglich, wobei wesentliche Elemente des Radfahrens in der Natur verloren gingen.

Schließlich können entsprechende Aktuatoren auch zur Diebstahlsicherung beitragen. Beispielsweise kann veranlasst werden, dass bei Ausführen einer bestimmten Applikation bestimmte Funktionen des Fahrzeugs vorübergehend nicht verfügbar sind. Relativ einfach wäre hier eine Ansteuerung der Bremsen mit einem in einem vorhergehenden Ausführungsbeispiel gezeigten Aktuator so zu nennen, dass diese blockieren. Alternativ könnte ein Nabenmotor auf höchste Regenerationsstufe schalten, so dass das Fahrrad nur mit großer Mühe bewegt werden kann. Dies kann beispielsweise durch eine "Abschließ-Applikation" als Diebstahlschutz durch den Verwender zum Aktivieren derartiger Funktionen erfolgen. Eine noch andere Sicherungsmöglichkeit wäre eine Blockade der Lenkung bei aktivierter Sicherung.

Obwohl die Erfindung in den Ausführungsbeispielen im Einsatz an Fahrrädern bzw. Pedelecs beschrieben wurde, können die Vorteil der Erfindung, die in dieser Anwendung bevorzugt zum Tragen kommen, wie geringes Gewicht, modulare Erweiterbarkeit oder einfacher Aufbau und Einsatz der Stellglieder und der Kommunikation mit der Benutzerschnittstelle und dadurch deutlich vereinfachte Erstellung von Applikationen zur Kommunikation zwischen Benutzerschnittstelle und Stellglied selbstverständlich auch in anderen Umgebungen wie vorstehend kurz erwähnt zum Tragen kommen.

Es wird eine neuartige Vorrichtung zur Vereinfachung der Kommunikation zwischen einem Stellglied und einer Benutzerschnittstelle vorgestellt. Die Vorrichtung umfasst ein Stellglied und eine Datenaustauscheinrichtung, die mit dem Stellglied verbunden ist und drahtlos mit anderen entsprechenden Vorrichtungen und einer Benutzerschnittstelle kommunizieren kann, und zudem die Möglichkeit aufweist, beliebige Applikationen aus einem frei programmierbaren Speicher der Vorrichtung auszuführen und dort Daten zu sammeln. Erfindungsgemäß ist die Datenaustauscheinrichtung von der Benutzerschnittstelle drahtlos über eine dynamische Internetanwendung ansteuerbar. Die Applikation ist auf ein Smartphone oder ein ähnliches externes Gerät ausgelagert.

## Patentansprüche

1. System mit einem Stellglied eines Zweirads, einer Benutzerschnittstelle und einer Vorrichtung zur Vereinfachung der Kommunikation zwischen mindestens dem Stellglied des Zweirads und der Benutzerschnittstelle, wobei die Vorrichtung Daten mit dem Stellglied über eine Schnittstelle austauscht, **dadurch gekennzeichnet, dass** die Vorrichtung eine Datenaustauscheinrichtung aufweist, die von der Benutzerschnittstelle drahtlos über eine dynamische Internetanwendung ansteuerbar ist, und die Vorrichtung mit zumindest einem Teil des Stellglieds als bauliche Einheit ausgeführt ist.

2. System nach Anspruch 1, wobei die Vorrichtung auf einer Platine angeordnet und mit zumindest einem Teil des Stellglieds kontaktiert ist.

3. System nach Anspruch 1, wobei die Benutzerschnittstelle dazu fähig ist, drahtlos an die Vorrichtung zur Vereinfachung der Kommunikation Befehle abzugeben und Daten von der Vorrichtung zur Vereinfachung der Kommunikation zu empfangen wobei eine dynamische Internetanwendung die drahtlose Kommunikation zwischen Benutzerschnittstelle und Vorrichtung zur Vereinfachung der Kommunikation steuert.

4. System nach Anspruch 3, wobei die Benutzerschnittstelle ein Smartphone umfasst.

5. System nach Anspruch 3 oder 4, wobei die drahtlose Kommunikation über WLAN erfolgt.

6. System nach einem der Ansprüche 2 bis 5, mit einem Sensor zur Erfassung von Betriebsparametern des Zweirads.

7. Verwendung des Systems nach einem der vorhergehenden Ansprüche in einem zumindest vorwiegend muskelkraftbetriebenen Fahrzeug.

8. Verwendung nach Anspruch 7, wobei das Fahrzeug ein mit Akkumulatoren betriebenes Pedelec ist.

9. Verwendung nach Anspruch 8, wobei das Stellglied eine optimale Entladung der Akkumulatoren auf der Grundlage der Steuerung durch die Benutzerschnittstelle unter Berücksichtigung des Bedarfs sicherstellt.

10. Verwendung nach einem der Ansprüche 7 bis 9, wobei die Vorrichtung die Benutzerschnittstelle in Abhängigkeit von den Signalen eines Sensors ansteuert, der zumindest einen Betriebszustand des Fahrzeugs erfasst.

11. Verfahren zur drahtlosen Kommunikation zwischen einem Stellglied eines Zweirades und einer Benutzerschnittstelle, **dadurch gekennzeichnet, dass** die Kommunikation zwischen Benutzerschnittstelle und Stellglied über eine im Stellglied integrierte Vorrichtung zur Vereinfachung der Kommunikation erfolgt, die mittels einer dynamischen Internetanwendung ansteuerbar ist.

12. Kopplung mehrerer Systeme nach einem der Ansprüche 3 bis 5, weiter **dadurch gekennzeichnet, dass** eine Benutzerschnittstelle eines Systems eine Masterschnittstelle ist, die die Benutzerschnittstellen aller anderen Systeme derart gemäß Vorgaben aus der Masterschnittstelle und/oder aus Sensoren des jeweiligen anderen Systems so ansteuert, dass die mehreren Zweiräder durch das System mit der Masterschnittstelle gesteuert werden.

## Claims

1. System having an actuator of a two-wheeled vehicle, a user interface and a device for simplifying the communication between at least the actuator of the two-wheeled vehicle and the user interface, wherein the device exchanges data with the actuator via an interface, **characterized in that** the device has a data exchange apparatus which can be actuated by the user interface in a wireless fashion via a dynamic Internet application, and the device is embodied as a structural unit with at least part of the actuator.

2. System according to Claim 1, wherein the device is arranged on a circuit board and is placed in contact with at least part of the actuator.

3. System according to Claim 1, wherein the user interface is able to output commands in a wireless fashion to the device for simplifying the communication and to receive data from the device for simplifying the communication, wherein a dynamic Internet application controls the wireless communication between the user interface and the device for simplifying the communication.

4. System according to Claim 3, wherein the user interface comprises a smartphone.

5. System according to Claim 3 or 4, wherein the wireless communication takes place via WLAN.

6. System according to one of Claims 2 to 5, having a sensor for acquiring operational parameters of the two-wheeled vehicle.

7. Use of the system according to one of the preceding claims in an at least mainly muscle-power-operated vehicle.

8. Use according to Claim 7, wherein the vehicle is a pedelec which is operated with accumulators.

9. Use according to Claim 8, wherein the actuator ensures optimum discharging of the accumulators on the basis of the control by the means of the user interface taking into account the demand.

10. Use according to one of Claims 7 to 9, wherein the device actuates the user interface as a function of the signals of a sensor which senses at least one operating state of the vehicle.

11. Method for performing wireless communication between an actuator of a two-wheeled vehicle and a user interface, **characterized in that** the communication takes place between the user interface and actuator via a device for simplifying the communication, which is integrated in the actuator and can be actuated by means of a dynamic Internet application.

12. Connection of a plurality of systems according to one of Claims 3 to 5, characterized further in that a user interface of a system is a master interface which actuates the user interfaces of all the other systems according to the prescriptions from the master interface and/or from sensors of the respective other system in such a way that the plurality of two-wheeled vehicles are controlled by the system with the master interface.

## Revendications

1. Système comprenant un organe de commande d'un véhicule deux-roues, une interface utilisateur et un dispositif pour simplifier la communication entre au moins l'organe de commande du véhicule deux-roues et l'interface utilisateur, le dispositif échangeant des données avec l'organe de commande par le biais d'une interface, **caractérisé en ce que** le dispositif présente un dispositif d'échange de données qui peut être commandé sans fil par l'interface utilisateur par le biais d'une application Internet dynamique et le dispositif est réalisé sous forme d'unité structurelle avec au moins une partie de l'organe de commande.

2. Système selon la revendication 1, dans lequel le dispositif est disposé sur une platine et au moins une partie de l'organe de commande vient en contact avec lui.

3. Système selon la revendication 1, dans lequel l'interface utilisateur est en mesure d'envoyer des ordres sans fil au dispositif pour simplifier la communication et de recevoir des données du dispositif pour simplifier la communication, une application Internet dynamique commandant la communication sans fil entre l'interface utilisateur et le dispositif pour simplifier la communication.

4. Système selon la revendication 3, dans lequel l'interface utilisateur comprend un téléphone intelligent.

5. Système selon la revendication 3 ou 4, dans lequel la communication sans fil s'effectue par WLAN.

6. Système selon l'une quelconque des revendications 2 à 5, comprenant un capteur pour détecter des paramètres fonctionnels du véhicule deux-roues.

7. Utilisation du système selon l'une quelconque des revendications précédentes dans un véhicule entraîné au moins en majeure partie par la force musculaire.

8. Utilisation selon la revendication 7, dans laquelle le véhicule est un vélo électrique fonctionnant avec des accumulateurs.

9. Utilisation selon la revendication 8, dans laquelle l'organe de commande assure une décharge optimale des accumulateurs sur la base de la commande par l'interface utilisateur en tenant compte des besoins.

10. Utilisation selon l'une quelconque des revendications 7 à 9, dans laquelle le dispositif commande l'interface utilisateur en fonction des signaux d'un capteur qui détecte au moins un état de fonctionnement du véhicule.

11. Procédé de communication sans fil entre un organe de commande d'un véhicule deux-roues et une interface utilisateur, **caractérisé en ce que** la communication entre l'interface utilisateur et l'organe de commande s'effectue par le biais d'un dispositif pour simplifier la communication intégré dans l'organe de commande, qui peut être commandé au moyen d'une application Internet dynamique.

12. Accouplement de plusieurs systèmes selon l'une quelconque des revendications 3 à 5, **caractérisé en outre en ce qu'**une interface utilisateur d'un système est une interface maîtresse qui commande les interfaces utilisateur de tous les autres systèmes conformément à des prescriptions provenant de l'interface maîtresse et/ou de capteurs de l'autre système respectif de telle sorte que la pluralité de véhicules deux-roues soit commandée par le système avec l'interface maîtresse.
